Europäisches Patentamt

(19) European Patent Office

Office européen des brevets

(11) Publication number: **0 273 498**
**B1**

# EUROPEAN PATENT SPECIFICATION

(45) Date of publication of the patent specification:
01.08.90

(51) Int. Cl.⁵: **F16K 1/228,** F16K 1/16

(21) Application number: **87202391.6**

(22) Date of filing: **02.12.87**

(54) Channel provided with a valve.

(30) Priority: **03.12.86 NL 8603075**

(43) Date of publication of application:
**06.07.88 Bulletin 88/27**

(45) Publication of the grant of the patent:
**01.08.90 Bulletin 90/31**

(84) Designated Contracting States:
**AT BE CH DE ES FR GB GR IT LI LU NL SE**

(56) References cited:
**DE-A- 1 550 204**
**DE-B- 1 217 156**
**US-A- 3 114 946**
**US-A- 3 412 975**
**US-A- 4 224 766**

(73) Proprietor: **Koudijs, Philip Rijk, Kruisstraat 80,**
**NL-6411 BW Heerlen(NL)**

(72) Inventor: **Koudijs, Philip Rijk, Kruisstraat 80,**
**NL-6411 BW Heerlen(NL)**

(74) Representative: **Noz, Franciscus Xaverius, Ir. et al,**
**Algemeen Octrooibureau P.O. Box 645, NL-5600 AP**
**Eindhoven(NL)**

## Description

The invention relates to sealing arrangement for a channel provided with a valve which can pivot about a pivot axis between an open position and a closed position, whilst sealing means are provided on walls of the channel which in the closed position of the valve co-operate with circumferential edges of the valve extending along the sealing means, whereby a sealing means is formed by a longitudinal strip consisting of resilient material, said strip having a central part with a curved cross-section and, on both sides of said central part, edge parts joining said central part, by means of which edge parts the strip is provided on a wall of the channel by means of fixing means in such a way that an edge part can be adjusted transversely to the longitudinal direction of the strip and locked in a desired position.

From US-A 4 224 766 there is known a treshold provided with sealing means having a longitudinal-resilient strip for co-operating with the lower end of a door. Said resilient strip has been provided with enlarged edges which are retained in recesses provided in movable blocks. The blocks have been mounted on srews for displacement along the screws upon rotation of said screws.

The invention relates to a sealing arrangement for channels as are e.g. used for the transport of gasses which may have a high temperature, such as e.g. hot flue gasses.

Now according the invention an edge part of the strip is fixed by means of bolts which extend through slotted holes extending transversely to the longitudinal direction of the strip.

When the sealing means is being mounted it will be easy, because of the method of mounting that has been chosen, to adjust said sealing means , in particular its central part, to possible variations in the width of the gap present between the circumferential edge of the valve and the wall of the channel in the closed position of the valve.

The invention will be further explained hereinafter with reference to a few embodiments of the construction according to the invention diagrammatically illustrated in the accompanying figures.

Fig. 1 diagrammatically illustrates an arrangement of a valve according to the invention.

Fig. 2 illustrates on a larger scale an end of a valve with a sealing means co-operating therewith.

Fig. 3 illustrates a section of a further embodiment according to the invention corresponding with fig. 2.

Fig. 4 diagrammatically illustrates a section of a shaft support for a valve, seen according to the line IV-IV in fig. 5, whereby for the sake of clarity various parts are illustrated at some distance from one another.

Fig. 5 is a view of fig. 4, seen according to the arrow V in fig. 4.

Fig. 6 is a section of fig. 5, seen according to the line VI-VI in fig. 5, whereby in fig. 6 some parts are again illustrated at some distance from one another for the sake of clarity.

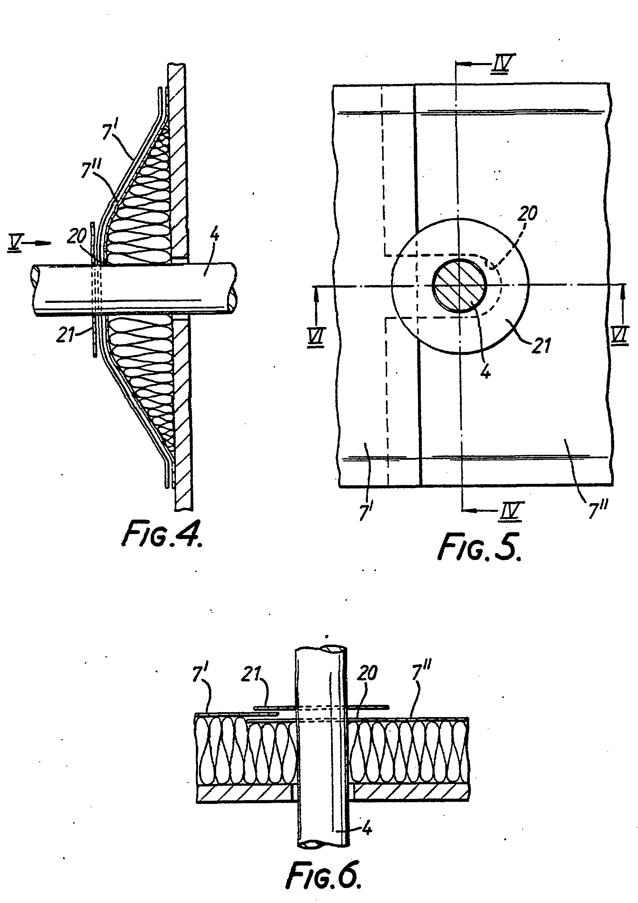

Fig. 1 diagrammatically illustrates a valve 1, which in this embodiment is provided with a pair of rectangular plate-shaped parts 2 and 3 extending parallel to each other. The valve 2 is rotatably supported in a frame 5 by means of a shaft 4, which frame is intended for being mounted in a channel for the passage of gasses such as flue gasses, such that the inner boundary walls 6 of said frame 5 will form part of the inner walls of the channel in question.

The valve 1 is adjustable, by means of adjusting means (not shown), between an open position, in which the gasses can freely flow through the channel in question, and a closed position, in which the valve must close off the passage through the channel.

For sealing the gaps between the circumferential edges of the valve 1 in the closed position and the inner wall 6 of the relevant channel use is made of a sealing means 7. Such a sealing means is formed by a strip-shaped part made of resilient material, e.g. spring steel, whose longitudinal axis in the closed position of the valve extends parallel to the circumferential edge of the valve located opposite said strip-shaped part. The strip-shaped part thereby has a central part 8 having a curved cross-section and at both sides of said central part edge parts 9 and 10 joining the central part, said edge parts being fixed to the frame 5 and the wall of the channel respectively by means of regularly spaced bolts 11 and 12 respectively. Supporting strips 13 and 14 respectively are thereby provided between the inner wall 6 and the edge parts 9 and 10, the facing edge parts 15 and 16 respectively of said supporting strips extending under the ends of the curved central part joining the edge parts 9 and 10. The space bounded by the sealing means and the inner wall 6 of the channel is furthermore filled with an insulating material 8', such as e.g. glass wool, which prevents dust from entering said space during operation. If dust can enter said space namely and adhere there-in the resilient action of the curved central part 8 of the sealing means 7 may be undone with the lapse of time.

As furthermore appears from fig 2 the bolts 11 and 12 are passed through holes 17 and 18 respectively provided in the wall of the channel and in the frame 5 respectively, whereby the holes 18 are constructed as slotted holes extending perpendicularly to the longitudinal direction of the elongated sealing means.

Because of this it is possible, when the sealing means is fixed to the wall of the channel, to adjust the curvature of the curved central part to the width of the gap present between the relevant circumferential edge of the valve 1 and the opposite inner wall 6 of the channel by displacing the bolts 12 in the slotted holes 18, so that manufacturing tolerances and the like can be taken up easily.

Furthermore, when the sealing elements are mounted the sealing elements extending parallel to the pivot axis 4 are first provided on the wall parts located opposite each other. After these opposing sealing elements have been mounted the valve is pivoted into the closed position, whereby the circumferential edges of the valve 1 co-operating with said sealing elements will press down a little the curved central parts of said sealing means 7. Then the sealing elements, which must be mounted on the opposing wall parts supporting the shaft 4 are made to fit and mounted, so that it is ensured that there will be no leak slits at the joining ends of the walls 6 of the channel arranged perpendicularly to each other.

It will be apparent that when a valve is closed the circumferential edges of the valve will brush against the curved central parts 8, whereby any particles from the gasses conveyed through the channel which adhere to said central parts and/or to the edges will be struck off and at the same time the central parts will be pressed down resiliently, as a result of which a good sealing between the central parts of the sealing means and the circumferential edges of the valve will be effected.

Fig 3 illustrates a further possible embodiment of the construction according to the invention. Those parts which correspond with the parts discussed and illustrated in the figs 1 and 2 are provided with the same reference numbers as used in said figures.

Fig 3 illustrates an embodiment of a valve 1', whereby one of the plates 3' forming part of the valve protrudes from the plate 2' forming the other part of the valve at two opposing sides of the valve, so that at two opposing circumferential edges of the valve only the circumferential edges of the plate 3' touch the curved central parts 8 of the sealing means in the closed position of the valve. For the rest the operation of this construction corresponds with that of the embodiment first described.

In the figs 4 - 6 the construction of the sealing means near a valve axis 4 is illustrated.

As further appears from these figures a sealing means which extends along a wall part through which the shaft 4 is passed is constructed from a pair of strips 7' and 7", whose configuration is the same as that of a strip 7. In the end of the strip-shaped part 7" directed towards the shaft 4 there is provided a slotted hole 20, so that the end of said strip-shaped part 7" extends beyond the shaft 4 at both sides, as will be apparent especially from fig 5. The end of the strip 7' directed towards the shaft thereby overlaps the parts of the strip 7' extending beyond the shaft 4. A ring 21 slid round the shaft 4 extends over the partly overlapping ends of the strips 7' and 7".

Thus, using a sealing means according to the invention, an effective sealing has been realised also at the passage of a shaft 4 through the wall of the channel, whereby the two strips 7 and 7' can freely expand in longitudinal direction when there are temperature fluctuations.

It will be apparent that additions and/or alterations to the construction described hereinabove and illustrated in the figures will be possible within the spirit and scope of the invention. Thus it will be possible to provide slotted holes in one or both of the edge parts 9 and 10 of the strip 7 (7', 7"), instead of the slotted holes 18 in the wall parts of the channel.

Although fig 1 illustrates a valve whereby the shaft 4 is provided near the centre of the valve it will also be possible to provide the shaft near a boundary edge of the valve.

Furthermore it will be possible to provide several rotatable valves for closing the passage in the channel, whereby in the closed position of the valves the facing ends of adjacent valves will overlap each other. At least one of the two overlapping edges may thereby be provided with a similar sealing means as described hereinabove.

## Claims

1. Sealing arrangement for a channel provided with a valve (1) which can pivot about a pivot axis (4) between an open position and a closed position, whilst sealing means (7) are provided on walls (6) of the channel (5) which in the closed position of the valve (1) co-operate with circumferential edges of the valve (1) extending along the sealing means (7), whereby a sealing means (7) is formed by a longitudinal strip consisting of resilient material, said strip having a central part (8) with a curved cross-section and, on both sides of said central part, edge parts (9, 10) joining said central part (8), by means of which edge parts (9, 10) the strip (7) is mounted on a wall (6) of the channel by means of fixing means (11, 12) in such a way that an edge part (9, 10) can be adjusted transversely to the longitudinal direction of the strip (7) and locked in a desired position, characterized in that an edge part (10) of the strip is fixed by means of bolts (12) which extend through slotted holes (18) extending transversely to the longitudinal direction of the strip (7).

2. Sealing arrangement according to claim 1, characterized in that the slotted holes (18) are provided in the wall (6) of the channel (5).

3. Sealing arrangement according to claim 2, characterized in that the slotted holes (18) are provided in at least one edge part (10) of the strip (7)

4. Sealing arrangement according to any one of the preceding claims, characterized in that the space located between the central part (8) of the strip (7) and the wall (6) of the channel is filled with a compressible insulating material.

5. Sealing arrangement according to any one of the preceding claims, characterized in that a shaft (4) supporting the valve (1) has been passed through the walls of the channel and near the parts of said shaft (4) situated adjacent the walls there are provided on the walls a pair of strips (7', 7") whose ends overlap each other, whilst in at least one of said strips there is provided a slotted hole (20) for accomodating the shaft (4).

6. Sealing arrangement according to any, one of the preceding claims, whereby several co-operating valves (1) are provided in the channel, such that in the closed position of the valves (1) the facing edges of two adjacent valves overlap each other, characterized in that at least one of the overlapping edges is provided with a sealing means (7) according to any one of the preceding claims.

7. Method for mounting a sealing arrangement in a channel according to any one of the preceding claims, characterized in that first sealing means (7) extending parallel to the shaft (4) of the valve (1) are mounted on two opposing walls of the channel, after which the valve (1) is put into its closed position and then similar sealing means (7), to be mounted on two further opposing walls between the ends of the sealing means already mounted on tie first cited opposing walls, are made to fit in order to fill the space between the sealing means on said first cited opposing walls pressed down by the valve in its closed position.

**Patentansprüche**

1. Verschlußanordnung für eine Leitung, ausgestattet mit einer Absperrklappe (1), welche um eine Schwenkachse (4) zwischen einer Offenstellung und einer Schließstellung schwenkbar ist, wobei Dichteinrichtungen (7) an den Wänden (6) der Leitung (5) vorgesehen sind, welche in der Schließstellung der Absperrklappe (1) mit dem sich entlang der Dichteinrichtung (7) erstreckenden Umfangsbereich der Absperrklappe (1) zusammenwirken, wobei eine Dichteinrichtung (7) aus einem aus elastischem Material bestehenden Längsstreifen gebildet ist, wobei der Streifen einen Mittelbereich (8) mit gekrümmtem Querschnitt und, an beiden Seiten des Mittelbereiches, an dem Mittelbereich (8) ansitzende Randbereiche (9, 10), mittels derer der Streifen (7) mit Hilfe von Befestigungseinrichtungen (11, 12) so an einer Wand (6) der Leitung angebracht ist, daß ein Randbereich (9, 10) quer zur Längsrichtung des Streifens (7) ausgerichtet und in einer gewünschten Stellung befestigt werden kann, aufweist, dadurch gekennzeichnet, daß ein Randbereich (10) des Streifens mit Hilfe von Schrauben (12) befestigt ist, welche sich durch quer zur Längsrichtung des Streifens (7) sich erstreckende Schlitzlöcher (18) erstrecken.

2. Verschlußanordnung nach Anspruch 1, dadurch gekennzeichnet, daß die Schlitzlöcher (18) in der Wand (6) der Leitung (5) vorgesehen sind.

3. Verschlußanordnung nach Anspruch 2, dadurch gekennzeichnet, daß die Schlitzlöcher (18) in wenigstens einem Randbereich (10) des Streifens (7) vorgesehen sind.

4. Verschlußanordnung nach einem der vorangehenden Ansprüche, dadurch gekennzeichnet, daß der zwischen dem Mittelbereich (8) des Streifens (7) und der Wand (6) der Leitung liegende Raum mit einem zusammenpreßbaren isolierenden Material gefüllt ist.

5. Verschlußanordnung nach einem der vorangehenden Ansprüche, dadurch gekennzeichnet, daß eine die Absperrklappe (1) tragende Welle (4) durch die Wände der Leitung geführt ist und nahe den den Wänden benachbart liegenden Teilen der Welle (4) auf den Wänden ein Paar von Streifen (7', 7'') vorgesehen ist, deren Enden sich überdecken, wobei in wenigstens einem der Streifen ein Schlitzloch (20) zum Aufnehmen der Welle (4) vorgesehen ist.

6. Verschlußanordnung nach einem der vorangehenden Ansprüche, bei der mehrere zusammenwirkende Absperrklappen (1) in der Leitung vorgesehen sind, so daß in der Schließstellung der Absperrklappen (1) die einander zugewandten Randbereiche zweier benachbarter Absperrklappen sich überdecken, dadurch gekennzeichnet, daß wenigstens einer der überlappenden Randbereiche mit einer Dichteinrichtung (7) gemäß einem der vorangehenden Ansprüche versehen ist.

7. Verfahren zum Einsetzen einer Verschlußanordnung in eine Leitung nach einem der vorangehenden Ansprüche, dadurch gekennzeichnet, daß zunächst sich parallel zur Welle (4) der Absperrklappe (1) sich erstreckende Dichteinrichtungen (7) auf zwei gegenüberliegenden Wänden der Leitungen angebracht werden, wonach die Absperrklappe (1) in ihre Schließstellung gebracht wird und dann ähnliche, an zwei weiteren gegenüberliegenden Wänden zwischen den Enden der bereits auf den ersten genannten gegenüberliegenden Wänden angebrachten Dichteinrichtungen (7) anzubringende Dichteinrichtungen (7) angepaßt werden, um den Raum zwischen den auf den ersten genannten gegenüberliegenden Wänden angebrachten, von der Absperrklappe (1) in ihrer Schließstellung hinuntergedrückten Dichteinrichtungen (7) zu füllen.

**Revendications**

1. Dispositif d'étanchéité pour une conduite pourvue d'une vanne (1) capable de pivoter autour d'un axe de pivotement (4) entre une position ouverte et une position fermée, avec prévision, sur des parois (6) de la conduite (5), der moyens d'étanchéité (7) qui, à la position fermée de la vanne (1), coopèrent avec des bords circonférentiels de la vanne (1), s'étendant le long des moyens d'étanchéité (7), un moyen d'étanchéité (7) étant formé par une bande longitudinale en matériau élastique, cette bande comportant une partie centrale (8) ayant une section transversale courbe et, des deux côtés de cette partie centrale, des parties marginales (9, 10) reliées à la partie centrale (8) et au moyen desquelles la bande (7) est montée sur une paroi (6) de la conduite par des moyens de fixation (11, 12) de manière qu'une partie marginale (9, 10) puisse être ajustée transversalement à la direction longitudinale de la bande (7) et être bloquée à la position désirée, caractérisé en ce qu'une partie marginale (10) de la bande est fixée au moyen de boulons (12) qui traversent des trous oblongs (18) s'étendant transversalement à la direction longitudinale de la bande (7).

2. Dispositif d'étanchéité selon la revendication 1, caractérisé en ce que les trous oblongs (18) sont prévus dans la paroi (6) de la conduite (5).

3. Dispositif d'étanchéité selon la revendication 2, caractérisé en ce que les trous oblongs (18) sont prévus dans au moins une partie marginale (10) de la bande (7).

4. Dispositif d'étanchéité selon l'une quelconque des revendications précédentes, caractérisé en ce que l'espace compris entre la partie centrale (8) de la bande (7) et la paroi (6) de la conduite est rempli d'un matériau isolant compressible.

5. Dispositif d'étanchéité selon l'une quelconque des revendications précédentes, caractérisé en ce qu'un axe (4) supportant la vanne (1) traverse les parois de la conduite et une paire de bandes (7', 7'') dont les extrémités chevauchent est prévue près des parties de l'axe (4) situées à côté des parois, au moins une des bandes présentant un trou oblong (20) pour le passage de l'axe (4).

6. Dispositif d'étanchéité selon l'une quelconque des revendications précédentes, destiné à plusieurs vannes (1) coopérantes prévues dans une conduite, de manière que, à la position fermée des vannes (1), les bords dirigés l'un vers l'autre de deux vannes voisines chevauchent, caractérisé en ce que l'un au moins des bords chevauchants est pourvu d'un moyen d'étanchéité (7) selon l'une quelconque des revendications précédentes.

7. Procédé pour monter un dispositif d'étanchéité selon l'une quelconque des revendications précédentes dans une conduite, caractérisé en ce que l'on monte des premiers moyens d'étanchéité (7) parallèlement à l'axe (4) de la vanne (1) sur deux parois opposées de la conduite, on ferme ensuite la vanne (1) puis on ajuste des moyens d'étanchéité (7) semblables, à monter sur deux autres parois opposées entre les extrémités des moyens d'étanchéité déjà montés sur le parois opposées mentionnées en premier, de manière qu'ils remplissent l'espace entre les moyens d'étanchéité sur les parois opposées mentionnées en premier, moyens qui sont comprimés par la vanne à la position fermée.

FIG.4.

FIG.5.

FIG.6.